# EUROPEAN PATENT APPLICATION

(11) **EP 2 166 789 A1**
(43) Date of publication of application: **24.03.2010**
(21) Application number: 08305563.2
(22) Date of filing: 18.09.2008
(51) Int. Cl.: H04W 4/22

(54) **Emergency call alert**

(71) Applicant: Alcatel Lucent, 75008 Paris (FR)
(72) Inventor: Singh, Rajput Naveen Kumar, 110085, DELHI (IN)
(74) Representative: Nicolle, Olivier

(57) **Abstract**

An emergency call method wherein a message alert is sent to notify the initiation of an emergency call in parallel with the emergency call set up to an emergency contact is disclosed. The user invokes a message alert service by registering for the service through Unstructured Supplementary Service Data (USSD) procedure, (Interactive Voice Response) IVR or operator website. The method includes a server checking the status of Emergency Call Alert flag in the subscriber profile, fetching emergency contact number and predefined message from emergency call database, fetching location of the subscriber from location server, fetching routing information for the emergency contact from Home Location Register (HLR), and issuing a notifying message to the emergency contact.

## Description

### BACKGROUND

### Technical Field

The embodiments herein generally relate to mobile communications, and, more particularly, to emergency call services on mobile devices.

### Description of the Related Art

Emergency alert systems are generally deployed to alert large number of individuals of an impeding or ongoing emergency. Current alert systems utilize a variety of methods for communicating alerts including external alerts and using Public Switched Telephone Network (PSTN)/Mobile network to automatically initiate large number of telephone calls or SMSs to remote persons in case of an emergency.

In present solutions, the subscriber interface is limited to a website. If the subscriber needs to register for the emergency alert service, then he needs to have access to the website. The subscriber opting for the service has to register online and provide details of emergency contact number. But the process does not guarantee the quality of internet service provider. Further, the emergency service response centre is a remote party entity and an operator receiving an incoming emergency call routes the call to an emergency service center. The emergency service center has access to the emergency contact numbers and initiates triggering of notifications procedure when it receives an emergency call or during the emergency call via preferred communication methods. But the process consumes considerable amount of time.

The Emergency Service Response Centers make own decisions to provide additional services. A directory assistance server further initiates a call or message to the designated numbers in the user profile. But if the emergency response center does not respond to the emergency call in case of network congestion or other similar situation, it is difficult to establish a contact with the directory server.

Usually, emergency calls are established by operators with high priority. The prior art solutions provide notifications after the Emergency Service Response Center receives an emergency call which consumes a significant amount of time in case of an emergency.

### SUMMARY

In view of the foregoing, an embodiment herein provides an emergency call method in a telecommunication network wherein a dedicated emergency service center is alerted of an emergency situation. The telecommunication network comprises of a Location Server, an Emergency Call Database, a Home Location Register (HLR) and a Mobile Switching Center (MSC). The method comprising of a subscriber registering for the message alert service, checking if notifying subscriber is present in a predefined subscriber list, fetching at least one emergency contact number and a message from Emergency Call Database, fetching location of the subscriber from Location Server, fetching routing information for the emergency contact from Home Location Register (HLR), and issuing a notifying message to the emergency contact in parallel with emergency call setup. The notifying message to the remote emergency contact is a Short Message Service (SMS) and the message alert includes a text message and the current location of the subscriber from where the call is originating. The subscriber can register for the alert service by registering through Unstructured Supplementary Service Data (USSD) procedure, Interactive Voice Response (IVR), or by registering through operator web site.

Embodiments herein further disclose an emergency call system in a telecommunication network adapted for alerting a dedicated emergency service center of an emergency situation, where the telecommunication network comprises of a Location Server, an Emergency Call Database, a Home Location Register (HLR) and a Mobile Switching Center (MSC). The system includes at least one means adapted for registering for the message alert service, checking if notifying subscriber is present in a predefined subscriber list, fetching at least one emergency contact number and a message from Emergency Call Database, fetching location of the subscriber from Location Server, fetching routing information for the emergency contact from Home Location Register (HLR), and issuing a notifying message to the emergency contact in parallel with emergency call setup. The notifying message is a Short Message Service (SMS) which comprises a text message and current location of the subscriber from where the call is originating. Further, the system comprises at least one means adapted for registering the subscriber for the message alert service through Unstructured Supplementary Service Data (USSD) procedure, Interactive Voice Response (IVR), or through operator web site.
Embodiments herein further disclose an apparatus in the communication network comprising at least one means adapted for checking if a notifying subscriber is present in a predefined subscriber list, fetching at least one emergency contact number and a message from emergency call database, fetching location of the subscriber from location database, fetching routing information for the emergency contact, and issuing a notifying message including a text message and current location of the subscriber to the emergency contact.

These and other aspects of the embodiments herein will be better appreciated and understood when considered in conjunction with the following description and the accompanying drawings.

### BRIEF DESCRIPTION OF THE DRAWINGS

The embodiments herein will be better understood from the following detailed description with reference to the drawings, in which:

FIG. 1 is a block diagram illustrating the initiation of an alert for an emergency call with the involved network elements in a telecommunication network, according to an embodiment herein;

FIG. 2 is a block diagram illustrating the initiation of an alert for an emergency call in a communication network, according to an embodiment herein;

FIG. 3 is a block diagram depicting the registration process of alert service for an emergency call through Unstructured Supplementary Service Data (USSD) procedure in a telecommunication network, according to an embodiment herein;

FIG. 4 is a block diagram depicting the registration process of alert service for an emergency call through Interactive Voice Response (IVR) in a telecommunication network, , according to an embodiment herein;

FIG. 5 is a block diagram depicting the registration process of alert service for an emergency call through operator website in a telecommunication network, according to an embodiment herein;

FIG. 6 is a block diagram depicting the procedure of notifying the emergency call to an emergency contact number by an alert, according to an embodiment herein;

FIG. 7 illustrates a flowchart depicting a method of notifying the emergency call to the emergency contact number by an alert, according to an embodiment herein; and

FIG. 8 illustrates a flowchart depicting a method of notifying the emergency call to the emergency contact number by an alert in a mobile network, according to an embodiment herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

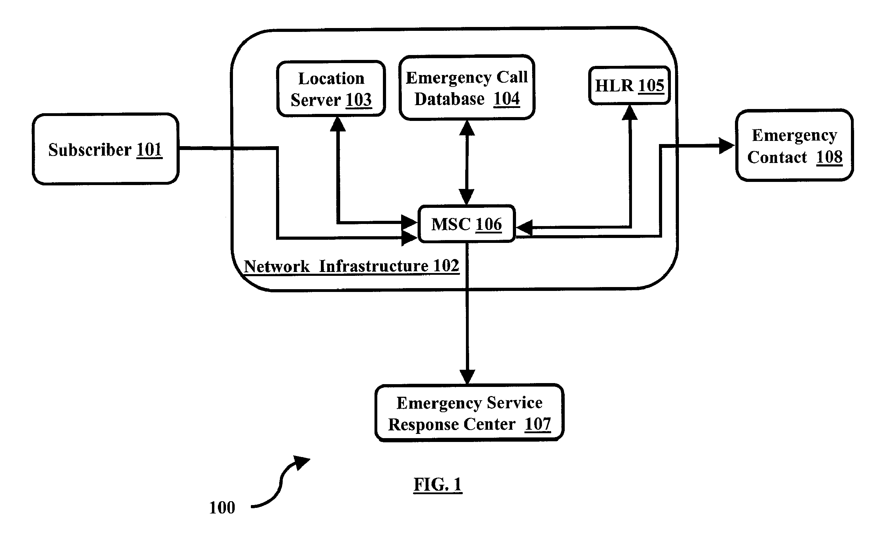

The embodiments herein achieve a method for initiating a message, such as a Short Message Service (SMS), alert to a remote party by the operator in parallel with an emergency call setup thereby sending the remote party a predefined message and the current location of the calling party. Referring now to the drawings, and more particularly to FIGS. 1 through 7, where similar reference characters denote corresponding features consistently throughout the figures, there are shown embodiments.

The embodiments herein disclose a method to initiate an alert to an emergency contact in case of an emergency call. Disclosed is an operator based solution where the operator sends alerts in the form of messages to the emergency contact in parallel with the emergency call set up. The user can register for the alert service with the operator by registration through the handset via Unstructured Supplementary Service Data (USSD) procedure, through Interactive Voice Response (IVR), and through the operator website. The alert includes a message and also the present location of the caller, where the message has been predefined by the user or can be created instantly. The required user data is stored in a database for each calling user number initiate the procedure. The operator includes an Emergency Call Alert flag in the subscriber profile to check the subscription of the service, wherein the flag is ON when the user has activated this service. When a call is originated, a Mobile Switching Center (MSC) determines the type of call and in case of an emergency call, the MSC further checks for the status of the Emergency Call Alert flag in the subscriber profile. If the flag is set to ON, then MSC fetches the emergency contact numbers from the database and the predefined message along with the calling subscribers current location is sent to the emergency contact numbers.

FIG. 1 is a block diagram illustrating the initiation of an alert for an emergency call with the involved network elements in a telecommunication network, according to an embodiment herein. The network infrastructure 102 includes Location Server 103, Emergency Call Database 104, Home Location Register (HLR) 105 and Mobile Switching Center (MSC) 106. Location Server 103 is a server which connects wireless mobile devices, operators and web services to provide location-based services to end-users. Operator maintains an Emergency Call Data base 104 which includes records of the emergency contact 108 numbers which are mapped to the subscriber's 101 phone numbers who subscribe to the service. The operators incorporate a message database where predefined message records would be present. The Home Location Register 105 is a database within the HPLMN (Home Public Land Mobile Network) which provides routing information for mobile terminated calls and messages and is also responsible for the maintenance of user subscription information. The Mobile Switching Center (MSC) is the primary service delivery node for GSM, responsible for handling voice calls and messages as well as other services such as conference calls, FAX and circuit switched data. The MSC 106 sets up and releases the end-to-end connection, handles mobility and hand-over requirements during the call and takes care of charging and real time pre-paid account monitoring. When an emergency call originates from the subscriber 101 phone, the MSC 106 checks for the status of the Emergency Call Alert flag in the subscribers 101 profile. MSC 106 recognizes the need for sending an emergency alert message to the emergency contact 108 numbers subscribed by the subscriber. The MSC 106 then fetches the emergency contact 108 numbers and predefined message from the emergency call database 104 and the calling subscriber's current location from the location server 103. Further, MSC 106 interrogates the Home Location Register (HLR) 105 for the routing information on reception of emergency contact 108 number from the database 104. After receiving the information from the HLR 105, MSC 106 contacts the emergency contact 108 for delivering the message containing the message text with the current location of the subscriber 101. Simultaneously, MSC 106 processes the emergency call to Emergency Service Response Center 107 in parallel.

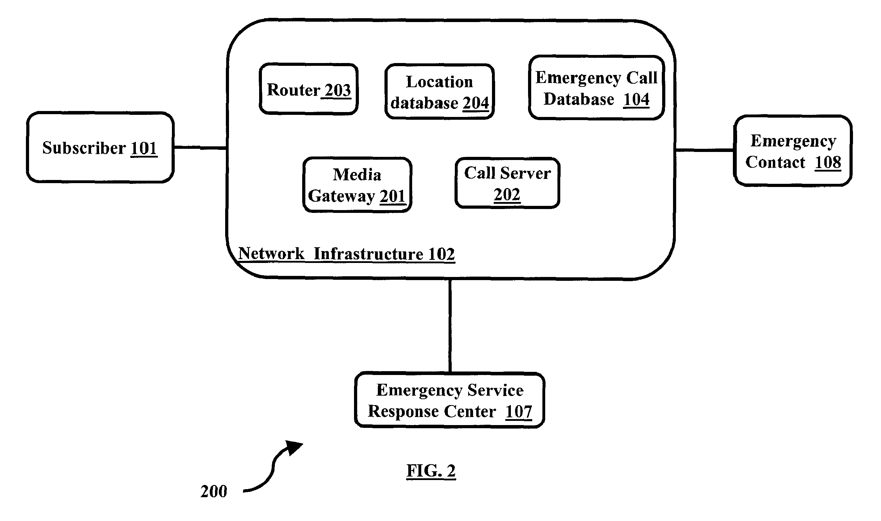

FIG. 2 is a block diagram illustrating the initiation of an alert for an emergency call in a communication network, according to an embodiment herein. The network infrastructure 102 includes Media Gateway 201, Call server 202, Router 203, Location Database 204 and Emergency call Database 104. Call Server 202 is a server which connects subscriber devices, operators and web services to provide communication services to end-users. Operator maintains an Emergency Call Data base 104 in the network which includes records of the emergency contact 108 details which are mapped to the subscriber's 101 device who subscribe to the service. The operators incorporate a message database in the network where predefined message records would be present. The subscriber 101 devices for making an emergency call may be a personal computer, Voice over Internet Protocol (VOIP), a landline telephone or a Mobile phone. A Media Gateway 201 acts as a translation unit between different communication networks and enable multimedia communications across Next Generation Networks over multiple transport protocols such as IP. For example, media gateways 201 could be a dedicated telecommunication equipment chassis, or even generic PC running VoIP software. The call server 202 sets up and releases the end-to-end connection, handles mobility and hand-over requirements during the call. When an emergency call originates from the subscriber 101 device, the call server 202 checks for the status of the Emergency Call Alert flag in the subscribers 101 profile. Call server 202 recognizes the need for sending an emergency alert message to the emergency contact 108 numbers subscribed by the subscriber. Call server 202 then fetches the emergency contact 108 numbers and a message from the emergency call database 104 and the calling subscriber's current location from the location database 204. Call server 202 then interrogates the router 203 for the routing information on reception of emergency contact 108 number from the database 104. Further, Call server 202 contacts the emergency contact 108 for delivering the message containing the message text with the current location of the subscriber 101. Simultaneously, Call server 202 processes the emergency call to Emergency Service Response Center 107 in parallel.

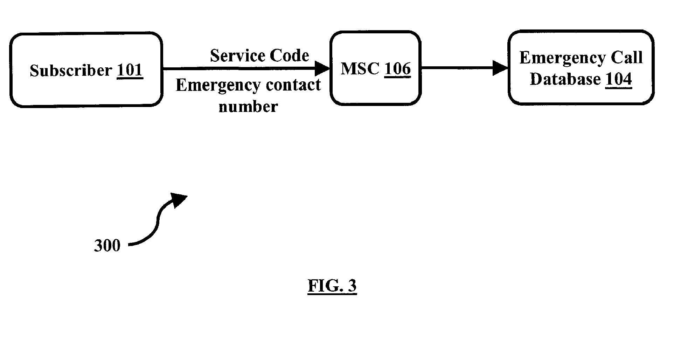

FIG. 3 is a block diagram depicting the registration process of alert service for an emergency call through Unstructured Supplementary Service Data (USSD) procedure in a telecommunication network, according to an embodiment herein. The subscriber 101 can register for the alert service through USSD procedure directly from the subscriber 101 phone. USSD is a Global System for Mobile (GSM) communication technology which is used to send text between a mobile phone and an application program in the network. USSD provides session oriented communication where messages can be sent to a mobile phone and stored for several days if the phone is not activated or within range. Further, the USSD technology provides user friendly procedures for registration services. The operator provides the details of service code to the subscriber. The service code is a special telephone number usually beginning with a *(star) key on the touch tone keypad, which enables the user to access the telephone company services. The subscriber 101 then provides the emergency contact 108 number with service code as prefix to the operator. On reception of the service request, the operator updates the emergency call database 104 with emergency contact 108 numbers. Also, the operator can decide the how many emergency contact 108 numbers a subscriber 101 can add for the service. When a subscriber 101 registers for the alert service, the Emergency Call Alert flag in the operators database of subscriber profiles is turned ON. The operator then maintains a new emergency contact 108 number database 104 for preserving records of emergency contact 108 numbers which are mapped to the subscribers 101 phone numbers who subscribe for the service.

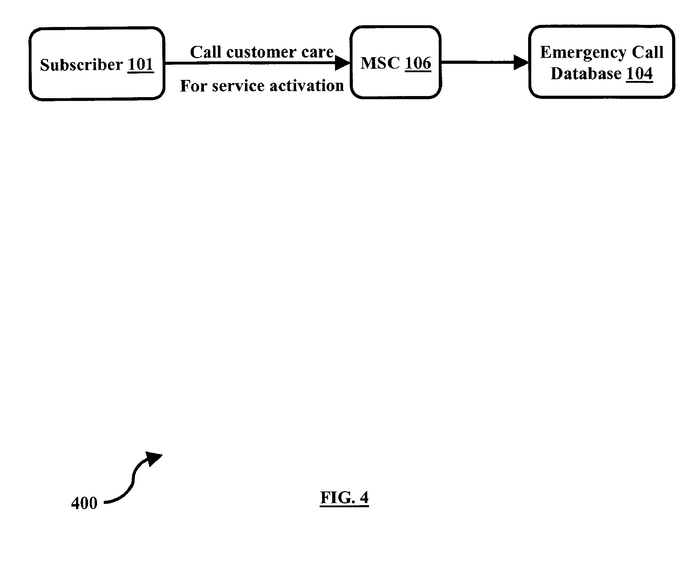

FIG. 4 is a block diagram depicting the registration process of alert service for an emergency call through Interactive Voice Response (IVR) in a telecommunication network, according to an embodiment herein. The subscriber 101 can register for the service by directly calling the customer care service number of the operator. The operator on receiving the request for the service connects the subscriber 101 to an IVR system which guides the subscriber 101 through the registration process. IVR is a technology that automates interactions with telephone callers. Call centers use IVR systems to identify and segment callers. The ability to identify customers allows the ability to tailor services according to the customer profile and also allows the option of choosing automated services. Information can be fed to the caller allowing choices such as wait in the queue, choose an automated service, or request a callback at a suitable time and telephone number. The use of Computer Telephone Integration (CTI) allows the IVR system to look up the calling line ID on a network database and identify the caller. During the registration process, the subscriber 101 provides the emergency contact 108 numbers to the operator. When a subscriber 101 registers for the alert service, the Emergency Call Alert flag in the operators database of subscriber profiles is turned ON. The operator then maintains a new emergency contact 108 number database 104 for preserving records of emergency contact 108 numbers which are mapped to the subscribers 101 phone numbers who subscribe for the service.

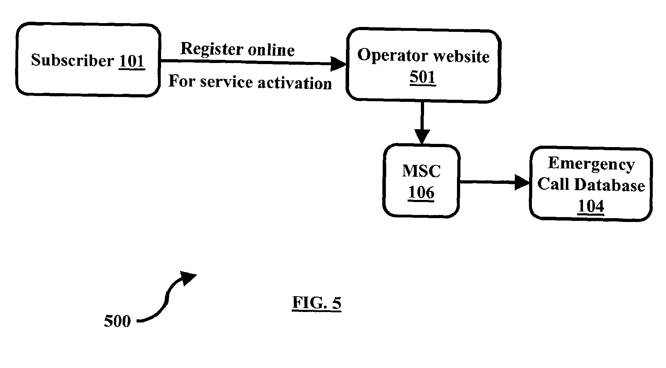

FIG. 5 is a block diagram depicting the registration process of alert service for an emergency call through operator website in a telecommunication network, according to an embodiment herein. The subscriber 101 can register online for the alert service activation by logging on to the operator website 501. When a subscriber 101 registers for the alert service, the Emergency Call Alert flag in the operators database of subscriber profiles is turned ON. The operator then maintains a new emergency contact number database 104 for preserving records of emergency contact 108 numbers which are mapped to the subscribers 101 phone numbers who subscribe for the service.

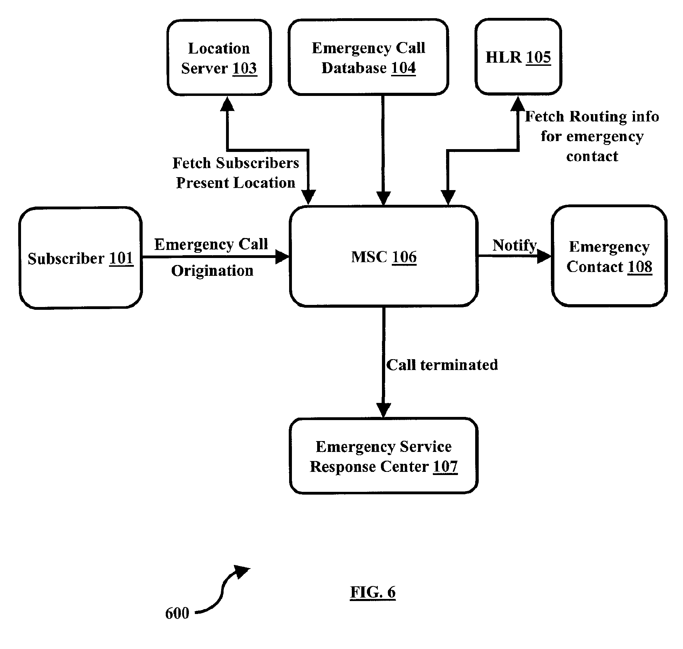

FIG. 6 is a block diagram depicting the procedure of notifying the emergency call to an emergency contact number by an alert, according to an embodiment herein. When a subscriber 101 originates a call, the MSC 106 first determines the type of call, if the call is a normal call or emergency call. If the call is an emergency call, the MSC 106 checks check for the status of the Emergency Call Alert flag in the subscriber's profile.
If the flag is set to ON, then MSC 106 realizes the need for sending an emergency alert message to the emergency contact 108 numbers subscribed by the subscriber 101. MSC 106 then fetches the emergency contact 108 numbers from the emergency call database 104 and the present location of the subscriber 101 from the location server 103. On receiving the emergency contact 108 number, the MSC 108 fetches routing information for emergency contact 108 from the Home Location Register (HLR) 105. When the routing information is obtained from HLR, MSC 106 further sends an alert in the form of a message containing the message text and the current location of the subscriber 101 notifying the emergency contact 108 that an emergency call is originated. Simultaneously MSC 106 processes the emergency call in parallel to Emergency Service Response Center 107.

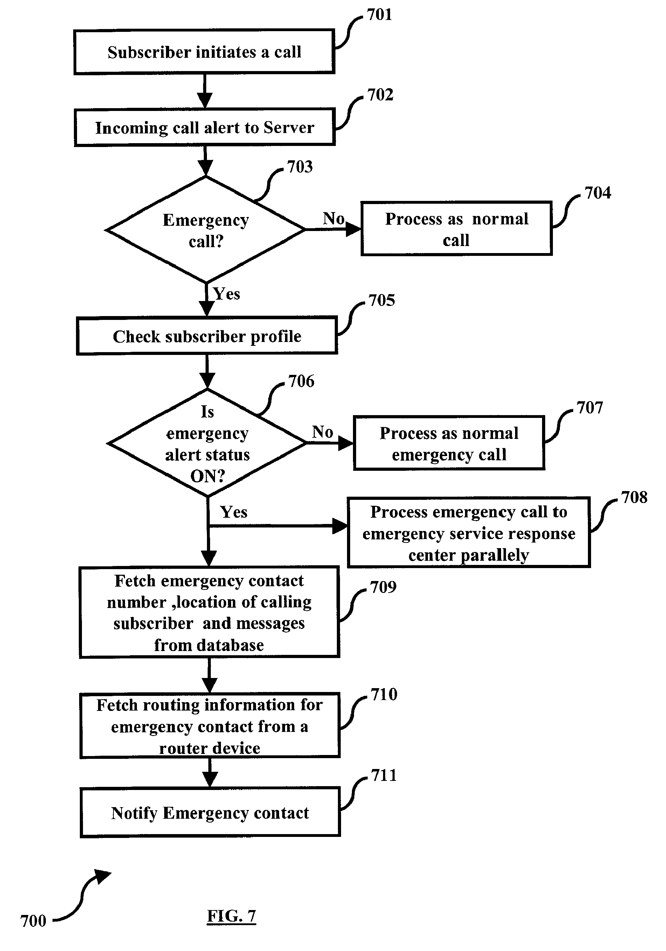

FIG. 7 illustrates a flowchart depicting a method of notifying the emergency call to the emergency contact number by an alert, according to an embodiment herein. The subscriber 101 originates (701) a call and an incoming call alert is sent (702) to a server (106, 202). The server may be an MSC in a Wireless network or a call server in a PC to PC call or a dedicated server in a PSTN network. The server (106, 202) checks (703) if the incoming call is an emergency call or not. If the call is not an emergency call, then process (704) the call as a normal call. If the call is an emergency call, server (106, 202) then checks (705) the profile of the subscriber 101 is in the pre-defined subscriber list. Server (106, 202) then checks (706) if the Emergency Call Alert flag status is ON. If the Emergency Call Alert flag status is OFF, then the subscriber is not registered for the service and the server (106, 202) processes (707) the call as normal emergency call. If the Emergency Call Alert flag status is ON, the, server (106, 202) fetches (709) the emergency contact 108 number along with the predefined message from the emergency call database 104 and the current location of the calling subscriber 101 from the location server 103. Further, server (106, 202) fetches (710) routing information for emergency contact 108 from a register or dedicated router device. Thereafter, server (106, 202) notifies (611) the emergency contact 108 the initiation of the emergency call by delivering a message containing the text message with the current location of the subscriber 101. Simultaneously server (106, 202) processes (708) the emergency call in parallel to Emergency Service Response Center 107. The various actions in method 700 may be performed in the order presented, in a different order, or simultaneously. Further, in some embodiments, some actions listed in FIG. 7 may be omitted.

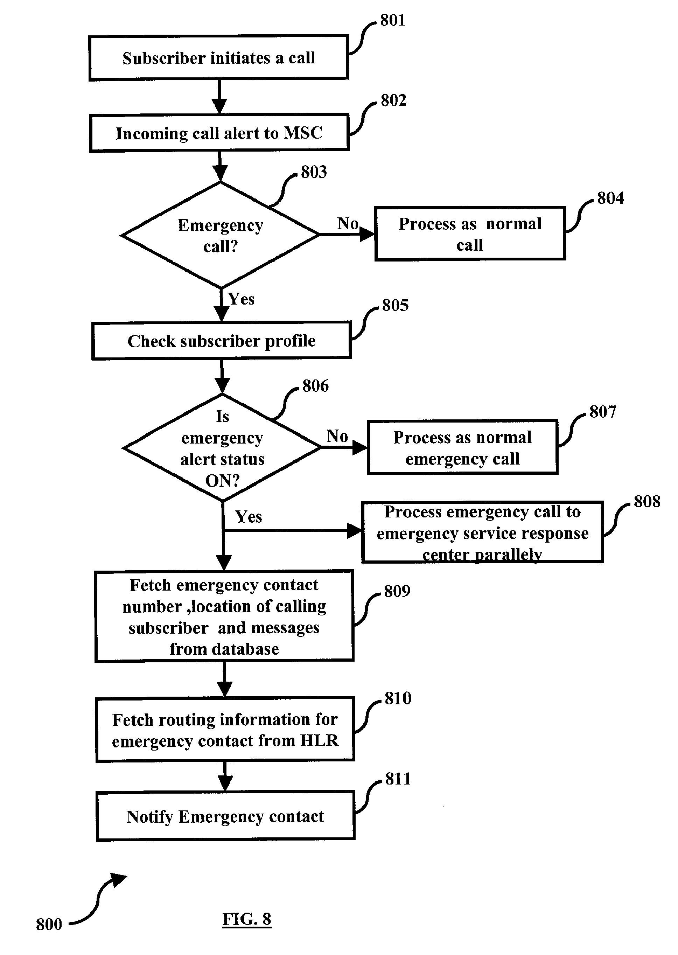

FIG. 8 illustrates a flowchart depicting a method of notifying the emergency call to the emergency contact number by an alert in a mobile network, according to an embodiment herein. The subscriber 101 originates (801) a call and an incoming call alert is sent (802) to MSC 106. MSC 106 checks (803) if the incoming call is an emergency call or not. If the call is not an emergency call, then process (804) the call as a normal call. If the call is an emergency call, MSC 106 then checks (805) the profile of the subscriber 101 is in the pre-defined subscriber list. MSC 106 then checks (806) if the Emergency Call Alert flag status is ON. If the Emergency Call Alert flag status is OFF, then the subscriber is not registered for the service and the MSC processes (807) the call as normal emergency call. If the Emergency Call Alert flag status is ON, the, MSC 106 fetches (809) the emergency contact 108 number along with the predefined message from the emergency call database 104 and the current location of the calling subscriber 101 from the location server 103. Further, MSC 106 fetches (810) routing information for emergency contact 108 from HLR 105. Thereafter, MSC 106 notifies (811) the emergency contact 108 the initiation of the emergency call by delivering a message containing the text message with the current location of the subscriber 101. Simultaneously MSC 106 processes (808) the emergency call in parallel to Emergency Service Response Center 107. The various actions in method 800 may be performed in the order presented, in a different order, or simultaneously. Further, in some embodiments, some actions listed in FIG. 8 may be omitted.

Embodiments disclosed herein allow the operator to scale the actual implementation of the registration process of the alert service to other user interfaces, for instance, Automatic Speech Recognition (ASR) and the like. The operators can charge the subscribers for service registration and subsequently for delivering the alerts to subscribed numbers, thereby leading to revenue generation. The embodiment combines the emergency services and services to enable the operator for delivering the alert to the emergency contact during the emergency call set up.

Embodiments disclosed herein provides faster notification to emergency contact by originating the notification procedure at the time the call server receives an emergency call as compared to the notifications initiated from the emergency response center after it receives the call. Further, the subscriber can opt for the service when he moves to other places if the service provided by the operator covers many provinces.

## Claims

1. An emergency call method in a telecommunication network (102) wherein a dedicated emergency service center is alerted of an emergency situation, wherein said telecommunication network (102) comprises a Location Server (103), an Emergency Call Database (104), a Home Location Register (HLR) (105) and a Mobile Switching Center (MSC) (106), said method comprising steps of:
a subscriber (101) registering for said message alert service;
checking if notifying subscriber (101) is present in a predefined subscriber (101) list;
fetching (809) at least one emergency contact (108) number and message from said Emergency Call Database (104);
fetching (809) location of said subscriber (101) from said Location Server (103);
fetching (810) routing information for said emergency contact (108) from said Home Location Register (HLR)(105); and
issuing a notifying (811) message to said emergency contact (108), wherein said message is sent to said emergency contact in parallel with said emergency call setup,

2. The method, as claimed in claim 1, wherein said message is a Short Message Service (SMS).

3. The method, as claimed in claim 1, wherein said notifying message comprises of said text message and location of said subscriber (101) from where said call is originating.

4. The method, as claimed in claim 1, wherein said subscriber (101) can register for said message alert service by registering through Unstructured Supplementary Service Data (USSD) procedure.

5. The method, as claimed in claim 1, wherein said subscriber (101) can register for said message alert service by registering through Interactive Voice Response (IVR).

6. The method, as claimed in claim 1, wherein said subscriber (101) can register for said message alert service by registering through operator web site.

7. An emergency call system in a telecommunication network (102) adapted for alerting a dedicated emergency service center of an emergency situation, wherein said telecommunication network (102) comprises of a Location Server (103), a Emergency Call Database (104), a Home Location Register (HLR) (105), and a Mobile Switching Center (MSC) (106), said system comprising at least one means adapted for:
a subscriber (101) registering for said message alert service;
checking if a notifying subscriber (101) is present in a predefined subscriber (101) list;
fetching (809) emergency contact (108) number and predefined message from said
Emergency Call Database (104);
fetching (809) location of said subscriber (101) from said Location Server (103);
fetching (810) routing information for said emergency contact (108) from said Home Location Register (HLR) (105); and
issuing a notifying (811) message to said emergency contact (108), wherein said message is sent to said emergency contact in parallel with said emergency call setup,

8. The system, as claimed in claim 7, wherein said message is a Short Message Service (SMS).

9. The method, as claimed in claim 7, wherein said notifying message comprises of said text message and location of said subscriber (101) from where said call is originating.

10. The system as claimed in claim 7, said system comprising at least one means adapted for registering for said message alert service through Unstructured Supplementary Service Data (USSD) procedure.

11. The system as claimed in claim 7, wherein said system comprising at least one means adapted for registering for said message alert service through Interactive Voice Response (IVR)

12. The system as claimed in claim 7, wherein said system comprising at least one means adapted for registering for said message alert service through operator web site.

13. A communication apparatus, wherein said apparatus comprising at least one means adapted for:
checking (705) if a notifying subscriber (101) is present in a predefined subscriber (101) list;
fetching (709) atleast one emergency contact (108) number and message from a Emergency Call Database (104);
fetching (709) location of said subscriber (101) from a location database (204);
fetching (710) routing information for said emergency contact (108); and
issuing a notifying (711) message to said emergency contact (108), wherein said notifying message comprises of said predefined message and location of said subscriber (101).
